# EUROPÄISCHE PATENTSCHRIFT

(11) **EP 3 231 127 B1**
(45) Veröffentlichungstag und Bekanntmachung des Hinweises auf die Patenterteilung: **30.09.2020**
(21) Anmeldenummer: 15807807.1
(22) Anmeldetag: 07.12.2015
(51) Int. Cl.: H04L 9/08, G09C 1/00

(54) **VERFAHREN ZUM BETREIBEN EINES SICHERHEITSMODULS**
METHOD FOR OPERATING A SECURITY MODULE
PROCÉDÉ DE FONCTIONNEMENT D'UN MODULE DE SÉCURITÉ

(30) Priorität: 08.12.2014 DE 102014018208
(43) Veröffentlichungstag der Anmeldung: 18.10.2017
(73) Patentinhaber: Giesecke+Devrient Mobile Security GmbH, 81677 München (DE)
(72) Erfinder: ECKARDT, Stefan, 82291 Mammendorf (DE)
(86) Internationale Anmeldenummer: PCT/EP2015/002478
(87) Internationale Veröffentlichungsnummer: WO 2016/091383

(56) Entgegenhaltungen:
- EP-A2- 1 610 218
- DE-A1- 19 944 991
- DE-A1-102010 044 687
- US-A1- 2014 211 942

## Beschreibung

Die Erfindung betrifft ein Verfahren zum Betreiben eines Sicherheitsmoduls" sowie ein entsprechendes Sicherheitsmodul.

Für Sicherheitsmodule, wie z.B. Chipkarten, ist es aus dem Stand der Technik bekannt, das Sicherheitsmodul mittels eines speziellen Kommandos zur Erzeugung eines kryptographischen Schlüssels bzw. eines kryptographischen Schlüsselpaars aufzufordern. Die generierten Schlüssel können dann zu kryptographischen Operationen verwendet werden.

Es gibt eine Vielzahl von Verfahren zur Erzeugung von kryptographischen Schlüsseln, wie z.B. das RSA-Verfahren. In der Regel umfasst eine Schlüsselerzeugung eine Primzahlensuche, die mit geeigneten Verfahren durchgeführt wird (siehe z.B. WO 2013/060467 A1 und EP 1 564 649 A2). Durch diese Primzahlensuche wird die Generierung von kryptographischen Schlüsseln sehr aufwändig. Ferner ist die zeitliche Dauer der Schlüsselgenerierung nicht vorhersehbar, da im Rahmen der Primzahlensuche in der Regel Primzahlenkandidaten ausgehend von Zufallszahlen erzeugt werden und anschließend darauf geprüft werden, ob sie eine Primzahl sind. Diese Generierung kann somit auch länger dauern, da ggf. immer neue Primzahlenkandidaten erzeugt und geprüft werden müssen.

Es ist deshalb wünschenswert, eine Schlüsselgenerierung in einem Sicherheitsmodul zu beschleunigen, ohne dass jedoch der Betrieb des Sicherheitsmoduls dadurch eingeschränkt wird.

Aus der Druckschrift EP 1 610 218 A2 ist ein Verfahren zum Betreiben eines tragbaren Datenträgers bekannt, bei dem vom tragbaren Datenträger wenigstens eine Operation einer vorgezogenen Bearbeitung unterzogen wird, bevor sie gemäß einer vorgegebenen Operationsabfolge zur Ausführung ansteht.

Die Druckschrift DE 10 2010 044687 A1 offenbart einen Zähler zum Sichern von auf einem Datenträger ausgeführten sicherheitsrelevanten Kommandos, wie der Berechnung einer kryptographischen Funktion. Dabei wird ein Wertebereich für den Zähler definiert. Wenn der Zähler den definierten Wertebereich verlässt, wird der Datenträger deaktiviert. Dabei kann auch ein Kommando abgebrochen werden, auch ein sicherheitsrelevantes.

Das Dokument DE 199 44 991 A1 offenbart, für ein auszuführendes Programm, einen Timer, der beim Aufruf eines Unterprogramms Taktzyklen zählt, welche für die Ausführung des Programms notwendig sind. Wenn vor Beendigung des Unterprogramms die für einen regulären Unterprogramm-Ablauf erforderliche Anzahl Taktzyklen überschritten wird, wird das Programm abgebrochen.

Aufgabe der Erfindung ist es, eine effiziente Schlüsselgenerierung in einem Sicherheitsmodul ohne Beeinträchtigung des Betriebs des Sicherheitsmoduls durchzuführen.

Diese Aufgabe wird durch das Verfahren gemäß Patentanspruch 1 bzw. das Sicherheitsmodul gemäß Patentanspruch 13 gelöst. Weiterbildungen der Erfindung sind in den abhängigen Ansprüchen definiert.

Das erfindungsgemäße Verfahren dient zum Betreiben eines Sicherheitsmoduls. Das Sicherheitsmodul ist vorzugsweise ein tragbarer Datenträger. Der tragbare Datenträger kann eine Chipkarte, wie z.B. eine SIM/USIM-Karte, ein USB-Token oder ein RFID-Transponder sein. Tragbare Datenträger sind reversibel mit Terminals bzw. Endgeräten verbindbar. Das Sicherheitsmodul kann auch ein fest in ein Endgerät bzw. ein Terminal integriertes Sicherheitsmodul sein, beispielsweise in der Form eines TMP-Moduls, einer embedded SIM/USIM-Karte oder eines NFC-Moduls.

Im Rahmen des erfindungsgemäßen Verfahrens wird ein Kommando im Sicherheitsmodul empfangen und durch dieses Sicherheitsmodul verarbeitet, wobei das Kommando z.B. von einem mit dem Sicherheitsmodul kommunizierenden Terminal stammt. Zusätzlich zur Verarbeitung des Kommandos wird eine Operation im Sicherheitsmodul (zeitlich) vorgezogen durchgeführt. Unter der vorgezogenen Durchführung einer Operation ist insbesondere deren Durchführung zu einem Zeitpunkt zu verstehen, bevor die Operation im Sicherheitsmodul angefordert wird und/oder bevor die Operation gemäß einer vorgegebenen Abfolge von Operationen zur Ausführung ansteht. Im Folgenden wird die vorgezogen durchgeführte Operation auch als vorgezogene Operation bezeichnet.

Das erfindungsgemäße Verfahren zeichnet sich dadurch aus, dass die vorgezogene Operation zumindest einen Teilprozess einer Schlüsselgenerierung umfasst, der intern (d.h. unaufgefordert) im Sicherheitsmodul ausgelöst wird, und dass die vorgezogene Operation durch das Sicherheitsmodul abgebrochen wird, falls sie nach Ablauf eines Zeitkriteriums nicht abgeschlossen ist. Der Begriff der Schlüsselgenerierung ist hier und im Folgenden weit zu verstehen und kann sich auf jedes beliebige Verfahren zur Erzeugung kryptographischer Schlüssel (ggf. auch ohne Primzahlensuche) beziehen.

Das erfindungsgemäße Verfahren hat den Vorteil, dass eine aufwändige kryptographische Schlüsselgenerierung bzw. ein Teilprozess davon frühzeitig im Sicherheitsmodul angestoßen wird, so dass bei einer Anforderung zur Schlüsselgenerierung nicht mehr der gesamte Prozess der Schlüsselerzeugung durchlaufen werden muss und die Schlüssel schneller verfügbar sind. Gegebenenfalls können die kryptographischen Schlüssel bei Empfang einer Anforderung zur Schlüsselgenerierung bereits vorliegen. Zugleich wird auch sichergestellt, dass die vorgezogene Schlüsselgenerierung die restlichen Prozesse auf dem Sicherheitsmodul nicht beeinträchtigt, was dadurch erreicht wird, dass Schlüsselgenerierungen, welche zu lange dauern, abgebrochen werden.

Der obige Begriff des Ablaufs eines Zeitkriteriums ist weit zu verstehen. Der Ablauf des Zeitkriteriums kann z.B. ohne Festlegung einer bestimmten Zeitspanne an das zeitliche Auftreten eines oder mehrerer Ereignissen gekoppelt sein. Nichtsdestotrotz kann der Ablauf des Zeitkriteriums auch durch den Ablauf einer vorbestimmten Zeitspanne repräsentiert sein. Diese Zeitspanne beginnt insbesondere mit dem Empfang des oben genannten Kommandos oder nach einer Teilsequenz der Verarbeitung dieses Kommandos.

Gemäß einer Eigenschaft des erfindungsgemäßen Verfahrens wird die vorgezogene Operation im Falle des Abbruchs bei ihrer erstmaligen Durchführung, die auf eine Initialisierung des Sicherheitsmoduls oder auf eine Benutzung eines Ergebnisses einer vormals (ohne Abbruch) durchgeführten vorgezogenen Operation folgt, bei jedem nachfolgenden Kommando oder nachfolgenden Kommandos einer oder mehrerer bestimmter Kommandoarten wieder durchgeführt, bis sie zumindest einmal ohne Abbruch beendet wird, z.B. bis der oder die kryptographischen Schlüssel erzeugt sind (d.h. bis die Schlüsselgenerierung abgeschlossen ist) bzw. alle zur Schlüsselgenerierung erforderlichen Ergebnisse (z.B. Primzahlen) vorliegen. Hierdurch wird sichergestellt, dass die Durchführung der vorgezogenen Operation mehrmals im Sicherheitsmodul probiert wird.

In einer weiteren bevorzugten Ausführungsform haben das Kommando und/ oder eine Kommandofolge, deren Bestandteil das Kommando ist, nicht den Zweck der Schlüsselgenerierung. Mit anderen Worten sind das Kommando bzw. die Kommandofolge unabhängig von der Schlüsselgenerierung und verfolgen eine andere Funktion bzw. Aufgabe.

In einer weiteren bevorzugten Ausgestaltung der Erfindung umfasst die vorgezogene Operation den Gesamtprozess der Schlüsselgenerierung. Als Ergebnis liefert diese vorgezogene Operation dann den oder die generierten kryptographischen Schlüssel, welche bis zu deren Verwendung im Sicherheitsmodul zwischengespeichert werden.

In einer weiteren Ausgestaltung der Erfindung umfasst die Schlüsselgenerierung die Ermittlung von einer oder mehreren Primzahlen. Umfasst die vorgezogene Operation einen Teilprozess der Schlüsselgenerierung, kann dieser z.B. die Ermittlung zumindest einer Primzahl beinhalten. Eine vorgezogene Operation in der Form eines Teilprozesses der Schlüsselgenerierung hat ferner den Vorteil, dass dieser Prozess aufgrund seiner geringeren Zeitdauer seltener abgebrochen wird und somit weniger oft wiederholt werden muss.

In einer weiteren Ausgestaltung des erfindungsgemäßen Verfahrens wird nach Benutzung eines Ergebnisses einer vormals (ohne Abbruch) durchgeführten vorgezogenen Operation oder nach einer Initialisierung des Sicherheitsmoduls die vorgezogene Operation erstmalig nach Ablauf eines weiteren Zeitkriteriums zugelassen. Das weitere Zeitkriterium kann wiederum ggf. durch den Ablauf einer Zeitspanne nach Initialisierung des Sicherheitsmoduls bzw. Benutzung des Ergebnisses der Operation definiert sein. Vorzugsweise ist das weitere Zeitkriterium jedoch derart ausgestaltet, dass die vorgezogene Operation erstmalig erst dann durchgeführt wird, wenn ein vorbestimmtes Kommando eine vorbestimmte Anzahl von Malen im Sicherheitsmodul empfangen wurde. Durch das weitere Zeitkriterium wird erreicht, dass eine zeitaufwändige Schlüsselgenerierung nicht zu Zeiten durchgeführt wird, in denen das Sicherheitsmodul mit anderen Prozessen der Initialisierung bzw. kryptographischen Verschlüsselung beschäftigt ist.

In einer besonders bevorzugten Variante ist das vorbestimmte Kommando ein Kommando, das in regelmäßigen Zeitabständen an das Sicherheitsmodul übermittelt wird. Insbesondere wird das Kommando von einem Terminal an das Sicherheitsmodul gesendet und dient zur Überprüfung, ob die Kommunikation mit dem Sicherheitsmodul noch möglich ist. Vorzugsweise ist das Kommando das Kommando "STATUS" aus dem Standard ETSI TS 102 221.

In einer weiteren Variante des erfindungsgemäßen Verfahrens wird im Falle, dass die vorgezogene Operation vor Ablauf des Zeitkriteriums abgeschlossen wurde, die wiederholte Durchführung der vorgezogenen Operation nur solange zugelassen, bis die Schlüsselgenerierung abgeschlossen ist oder die Ergebnisse der vorgezogenen Operation öder Operationen die Schlüsselgenerierung ermöglichen. Wenn die vorgezogene Operation den Gesamtprozess der Schlüsselgenerierung betrifft, führt dies dazu, dass die wiederholte Durchführung der vorgezogenen Operation überhaupt nicht zugelassen wird. Sind vorgezogene Operationen nicht mehr zugelassen, werden diese vorzugsweise erst dann wieder erlaubt, wenn die Ergebnisse der vorgezogenen Operation oder Operationen erstmalig benutzt werden. Mit der soeben beschriebenen Variante der Erfindung wird sichergestellt, dass die vorgezogenen Operationen nicht unnötig oft durchgeführt werden.

In einer weiteren Ausgestaltung der Erfindung wird nach einer Teilsequenz der Verarbeitung des Kommandos die Durchführung der vorgezogenen Operation begonnen. Auf diese Weise kann die vorgezogene Operation in geeigneter Weise in eine Kommandoausführung integriert werden.

In einer weiteren bevorzugten Variante ist das Kommando eine Anfrage an das Sicherheitsmodul, welche z.B. durch ein Terminal an das Sicherheitsmodul gerichtet wird, und die Verarbeitung des Kommandos umfasst die Übermittlung von Antwortdaten auf die Anfrage durch das Sicherheitsmodul, wobei die Antwortdaten vorzugsweise in Teilblöcken übertragen werden und die vorgezogene Operation zwischen der Übermittlung von aufeinander folgenden Teilblöcken durchgeführt wird. Vorzugsweise werden die Anfrage und die Antwortdaten basierend auf dem Protokoll T=0 des Standards ISO 7816 übermittelt, wobei eine vorgezogene Operation (sofern noch nicht abgeschlossen) durch das Sicherheitsmodul dann abgebrochen wird, wenn das Sicherheitsmodul ein Statuswort gemäß diesem Protokoll am Ende die Antwortdaten überträgt.

In einer Ausgestaltung wird das Sicherheitsmodul in einem ersten Modus, in welchem die Schlüsselgenerierung zusätzlich zur Verarbeitung des Kommandos durchgeführt wird, die Schlüsselgenerierung abbrechen, falls sie nach Ablauf eines Zeitkriteriums nicht abgeschlossen ist. In einem zweiten Modus, in welchem die Schlüsselgenerierung als Teil der Verarbeitung des Kommandos durchgeführt wird, führt das Sicherheitsmodul die Schlüsselgenerierung unabhängig von dem Zeitkriterium aus. Die herkömmliche Schlüsselgenerierung (zweiter Modus) kann unverändert durch ein Schlüsselgenerierungs-Kommando angestoßen werden. Ebenso kann die herkömmliche Schlüsselgenerierung unverändert als Teil der Kommando-Verarbeitung angestoßen werden, insbesondere wenn das Kommando eine Anwendung aufruft, welche vorgesehen ist, um die Schlüsselgenerierung auf dem Sicherheitsmodul zu starten.

Neben dem oben beschriebenen Verfahren betrifft die Erfindung ferner ein Sicherheitsmodul, welches derart ausgestaltet ist, dass im Betrieb des Sicherheitsmoduls ein Kommando im Sicherheitsmodul empfangen wird und durch das Sicherheitsmodul verarbeitet wird. Zusätzlich zur Verarbeitung des Kommandos wird eine Operation im Sicherheitsmodul vorgezogen durchgeführt. Die vorgezogene Operation umfasst zumindest einen Teilprozess einer Schlüsselgenerierung, der intern im Sicherheitsmodul ausgelöst wird, und die vorgezogene Operation wird durch das Sicherheitsmodul abgebrochen, falls sie nach Ablauf eines Zeitkriteriums nicht abgeschlossen ist. Das soeben beschriebene Sicherheitsmodul ist vorzugsweise zur Durchführung einer oder mehrerer bevorzugter Varianten des erfindungsgemäßen Verfahrens eingerichtet.

Ausführungsbeispiele der Erfindung werden nachfolgend anhand der beigefügten Figuren detailliert beschrieben.

Es zeigen:
- Fig. 1: eine schematische Darstellung, welche die Phasen der Schlüsselnutzung sowie Schlüsselgenerierung im Zusammenhang mit einer Ausführungsform die Erfindung verdeutlicht;
- Fig. 2: ein Zeitdiagramm, welches die Generierung eines Schlüsselpaars basierend auf einer Ausführungsform der Erfindung wiedergibt; und
- Fig. 3: ein Zeitdiagramm, welches eine Variante der Festlegung einer Zeitspanne zur Schlüsselgenerierung gemäß einer Ausführungsform der Erfindung wiedergibt.

Die nachfolgend beschriebenen Ausführungsformen der Erfindung werden anhand der Generierung eines asymmetrischen kryptographischen Schlüsselpaars aus öffentlichem und privatem Schlüssel beschrieben, wie z.B. eines RSA-Schlüsselpaars. Nichtsdestotrotz ist die Erfindung auch auf die Generierung eines symmetrischen Schlüssels anwendbar. Die Schlüsselgenerierung erfolgt auf einem Sicherheitsmodul bzw. Sicherheitselement, wie z.B. einer SIM/USIM-Karte, welche mit einem Terminal, wie z.B. einem Mobilfunkgerät, kommuniziert.

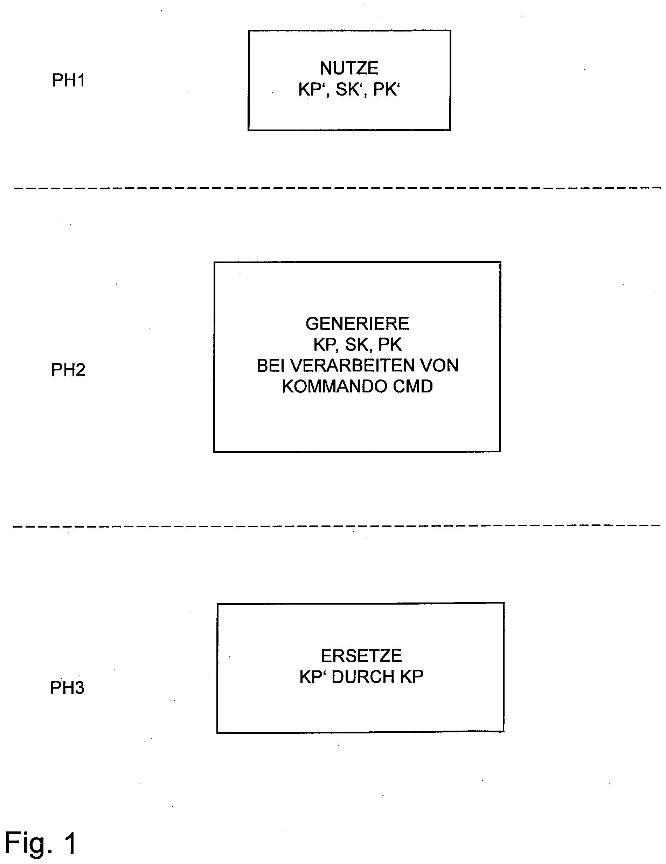

Fig. 1 ist eine schematische Darstellung, welche die verschiedenen Phasen der Schlüsselnutzung bzw. Schlüsselgenerierung in einem Sicherheitsmodul verdeutlicht. Die einzelnen Phasen sind als PH1, PH2 und PH3 angedeutet und über horizontale gestrichelte Linien voneinander getrennt. In der Phase PH1, welche z.B. mit der Inbetriebnahme einer Anwendung auf dem Sicherheitsmodul mit vorhandenen Schlüsseln oder neu generierten Schlüsseln beginnt, wird das vorhandene bzw. neu generierte Schlüsselpaar KP' mit geheimem Schlüssel SK' und öffentlichem Schlüssel PK' auf dem Sicherheitsmodul bzw. dem damit kommunizierenden Terminal genutzt.

In der Phase PH2, welche oftmals deutlich vor der weiter unten beschriebenen Phase PH3 liegt, wird ein neues Schlüsselpaar KP aus geheimem Schlüssel SK und öffentlichem Schlüssel PK generiert. Diese Generierung erfolgt zu einem vorgezogenen Zeitpunkt, zu dem das neue Schlüsselpaar KP noch gar nicht benötigt wird. Die Generierung des neuen Schlüsselpaars KP ist dabei nicht an ein spezielles Kommando der Schlüsselgenerierung gekoppelt, sondern erfolgt in Abhängigkeit von einem von der Schlüsselgenerierung unabhängigen Kommando, dass in Fig. 1 mit CMD bezeichnet ist. Dieses Kommando ist z.B. ein Status-Kommando oder ein Lesekommando, das vom Terminal an das Sicherheitsmodul übermittelt wird, wie weiter unten näher beschrieben wird. Da das generierte Schlüsselpaar KP in der Phase PH2 noch nicht benötigt wird, wird es auf dem Sicherheitsmodul zwischengespeichert.

Schließlich beginnt zu einem späteren Zeitpunkt die Phase PH3, in der das neue Schlüsselpaar KP zu verwenden ist. Die Phase PH3 kann z.B. dadurch initiiert werden, dass eine Altersgrenze für das frühere Schlüsselpaar KP' erreicht ist. Ein weiteres Ereignis zum Eintritt in die Phase PH3 kann darin bestehen, dass nur noch Schlüssel mit bestimmten Anforderungen (z.B. Schlüssel mit bestimmter Länge) im Sicherheitsmodul verwendet werden dürfen, wobei diese Anforderungen für das alte Schlüsselpaar KP' nicht erfüllt sind. Im Rahmen der Phase PH3, die unter Umständen auch nach über einem Jahr nach der Zwischenspeicherung des Schlüsselpaars KP in der Phase PH2 beginnt, wird schließlich das alte Schlüsselpaar KP' durch das neue Schlüsselpaar KP ersetzt.

Das Verfahren der Erfindung findet in der Phase PH2 statt und berücksichtigt die Tatsache, dass die vorgezogene Generierung des Schlüsselpaars KP, die intern im Sicherheitsmodul ausgelöst wird, unter Umständen eine sehr lange Zeitspanne in Anspruch nimmt, während der das Sicherheitsmodul nur eingeschränkt andere Funktionen durchführt. Dies kann dazu führen, dass das Terminal, welches mit dem Sicherheitsmodul kommuniziert, das Sicherheitsmodul zurücksetzt und von einem nicht mehr funktionierenden Sicherheitsmodul ausgeht. Ebenso kann es dazu kommen, dass zeitgleich mit der Schlüsselgenerierung Anfragen an das Sicherheitsmodul eingehen (beispielsweise Netzwerkauthentisierungs-Anfragen), die innerhalb einer bestimmten Zeitspanne verarbeitet werden müssen, da ansonsten eine Kommunikation des Terminals bzw. des darin verbauten Sicherheitsmoduls mit einem Netzwerk unterbrochen wird. Dauert in diesem Szenario die Schlüsselgenerierung zu lange, kann eine entsprechende Anfrage nicht mehr rechtzeitig beantwortet werden.

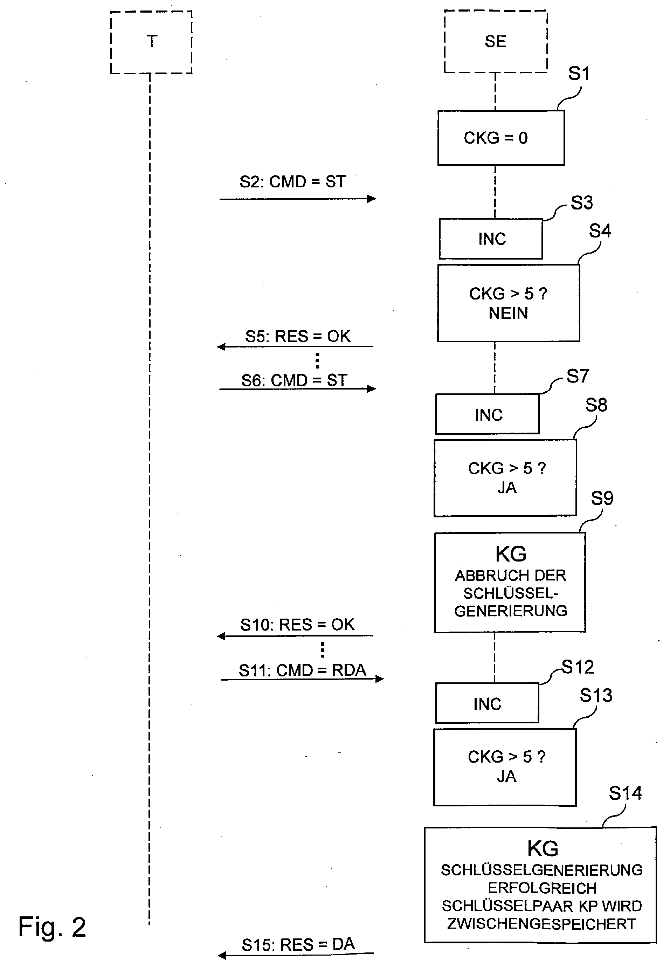

Um die obige Problematik zu umgehen, wird bei der Generierung des Schlüsselpaars KP in der Phase PH2 ein Zeitkriterium in der Form einer vorgegebenen Zeitspanne berücksichtigt, wobei die Schlüsselgenerierung durch das Sicherheitsmodul abgebrochen wird, sofern sie nach Ablauf der Zeitspanne nicht abgeschlossen wurde. Auf diese Weise werden negative Folgen einer zu lange andauernden Schlüsselgenerierung vermieden. Eine neue Schlüsselgenerierung wird dann beim nächsten Kommando CMD gestartet. Fig. 2 zeigt ein Zeitdiagramm, welches die Kommunikation zwischen einem Terminal T und einem Sicherheitsmodul bzw. Sicherheitselement SE im Rahmen einer Variante des erfindungsgemäßen Verfahrens verdeutlicht. Die Zeitachse erstreckt sich in vertikaler Richtung von oben nach unten. Erfindungsrelevante Verfahrensschritte werden durch Bezugszeichen S1, S2, ..., usw. referenziert, wobei jedoch auch weitere Schritte zwischen diesen Schritten im Rahmen der Kommunikation zwischen Terminal und Sicherheitsmodul durchgeführt werden.

Nach der Initialisierung bzw. einem Reset des Sicherheitsmoduls SE wird ein Zähler CKG auf 0 gesetzt (Schritt S1). Anschließend läuft der normale Betrieb des Sicherheitsmoduls ab, bei dem eine Kommunikation zwischen Terminal und Sicherheitsmodul und ein entsprechender Austausch von Daten stattfinden. Dabei werden Kommandos vom Terminal T an das Sicherheitsmodul SE übertragen. In der hier beschriebenen Ausführungsform erfolgt der Start einer vorgezogenen Schlüsselgenerierung unter Berücksichtigung des an sich bekannten Kommandos "STATUS", welches im Folgenden auch als Status-Kommando bezeichnet wird und in Fig. 2 mit ST abgekürzt ist. Mit diesem Kommando fragt das Terminal T in regelmäßigen Zeitabständen beim Sicherheitsmodul SE an, ob das Sicherheitsmodul noch verfügbar ist.

Der Schritt S2 in Fig. 2 verdeutlicht die erstmalige Übermittlung eines Kommandos CMD in der Form des Status-Kommandos ST. Beim Empfang dieses Kommandos in dem Sicherheitsmodul SE wird in Schritt S3 der Zähler CKG inkrementiert (angedeutet durch INC). Anschließend wird in Schritt S4 überprüft, ob der Zähler CKG größer als eine vorbestimmte Zahl ist, wobei die vorbestimmte Zahl im Beispiel der Fig. 2 den Wert "5" hat. Dies ist nicht der Fall, da das Kommando ST erstmalig übermittelt wurde und der Zähler CKG somit den Wert 1 aufweist. Als Konsequenz werden keine weitergehenden Schritte bzw. keine Schlüsselgenerierung im Sicherheitsmodul SE veranlasst. Vielmehr wird in Schritt S5 eine Antwort RES in der Form von "OK" an das Terminal gesendet. Hierdurch wird dem Terminal angezeigt, dass das Sicherheitsmodul weiterhin vorhanden ist.

Anschließend setzt sich die Kommunikation zwischen Terminal T und Sicherheitsmodul SE fort, wobei im Rahmen dieser Kommunikation u.a. nochmals viermal das Status-Kommando ST auftritt, das in Analogie zu den obigen Schritten S2 bis S5 verarbeitet wird. Im Schritt S6 tritt das Kommando ST dann zum fünften Mal auf. Dabei wird wiederum der Zähler CKG inkrementiert, wie durch den Schritt S7 angedeutet ist. Im Unterschied zu vorhergehenden Verarbeitung ist das Zähler CKG nunmehr größer als 5, wie in Schritt S8 festgestellt wird. Als Konsequenz wird nunmehr eine Schlüsselgenerierung KG zur Erzeugung eines asymmetrischen Schlüsselpaars veranlasst. Die Schlüsselgenerierung erfolgt somit nach der Initialisierung des Sicherheitsmoduls mit einer Verzögerung, die an den mehrmaligen Empfang des Status-Kommandos gekoppelt ist. Hierdurch wird berücksichtigt, dass bei der Initialisierung eines Sicherheitsmoduls in der Regel eine Vielzahl von Prozessen durchgeführt wird, so dass eine Schlüsselgenerierung nicht sofort nach der Initialisierung des Moduls begonnen werden sollte, um die Initialisierungsprozesse nicht zu behindern. Vielmehr wird im Rahmen der hier beschriebenen Ausführungsform gewartet, bis das Sicherheitsmodul die Initialisierung abgeschlossen hat und dann in regelmäßigen Abständen das Status-Kommando aussendet.

Wie bereits oben erwähnt, zeichnet sich das Verfahren der Erfindung dadurch aus, dass die Schlüsselgenerierung durch das Sicherheitsmodul abgebrochen wird, wenn sie eine bestimmte Zeitdauer überschreitet. Dies ist in Schritt S9 der Fig. 2 der Fall. Die Schlüsselgenerierung dauert nach dem Empfang des Status-Kommandos ST in Schritt S6 länger als eine vorbestimmte Zeitspanne, die mittels eines Timers gemessen wird. Um weitere Prozesse im Sicherheitsmodul bzw. im Rahmen der Kommunikation zwischen Terminal und Sicherheitsmodul nicht zu behindern, wird die Schlüsselgenerierung dann abgebrochen. Anschließend wird in an sich bekannter Weise eine Antwort RES in der Form von "OK" zur Bestätigung des Status-Kommandos an das Terminal zurückgesendet (Schritt S10).

Nachdem erstmalig im Schritt S9 eine Schlüsselgenerierung KG angestoßen und nicht erfolgreich beendet wurde, wird in der hier beschriebenen Variante der Erfindung diese Schlüsselgenerierung bei jedem nachfolgend empfangenen Kommando CMD, d.h. nicht nur für Status-Kommandos ST, sondern auch für andere Kommandos, wieder angestoßen, bis es schließlich zu einer erfolgreichen Generierung der kryptographischen Schlüssel kommt. Dies ist im Schritt S11 und den darauf folgenden Schritten angedeutet.

In Schritt S11 wird ein Kommando CMD in der Form eines Daten-Lesekommandos RDA von dem Terminal T an das Sicherheitsmodul SE übermittelt. Im Schritt S12 erfolgt wiederum die Überprüfung des Zählers CKG. Dieser ist größer 5, wie in der Überprüfung im Schritt S13 festgestellt wird. Nunmehr wird in Schritt S14 eine nochmalige Schlüsselgenerierung KG ausgelöst. Diese Schlüsselgenerierung läuft in kürzerer Zeit als im obigen Schritt S9 ab und wird erfolgreich abgeschlossen, bevor die vorbestimmte Zeitspanne abgelaufen ist.

Das erfolgreich generierte Schlüsselpaar KP wird dann verschleiert in einem Speicher des Sicherheitsmoduls hinterlegt. Anschließend übermittelt das Sicherheitsmodul eine Antwort RES auf das obige Kommando RDA in Form der angefragten Daten DA an das Terminal T (Schritt S15). Das neu generierte Schlüsselpaar KP wird schließlich zu einem späteren Zeitpunkt (siehe Phase PH3 der Fig. 1) genutzt. Da das Schlüsselpaar KP in Schritt S14 erfolgreich generiert wurde, wird in der nachfolgenden Kommunikation die nochmalige Generierung des Schlüsselpaars vor dessen Verwendung unterbunden.

In einer abgewandelten Variante der Ausführungsform der Fig. 2 bezieht sich der Prozess KG nicht auf den gesamten Prozess der Schlüsselgenerierung, sondern nur auf einen Teilprozess davon, wobei der Teilprozess immer dann abgebrochen wird, wenn die obige vorbestimmte Zeitspanne vor Abschluss des Teilprozesses abgelaufen ist. Der entsprechende Teilprozess liefert ein Zwischenergebnis der Schlüsselgenerierung. Ein Beispiel eines solchen Teilprozesses ist die Erzeugung und Verifikation einer Primzahl, welche im Rahmen der Schlüsselgenerierung benötigt wird. Diese Primzahl wird bei erfolgreichem Abschluss des Teilprozesses verschleiert im Sicherheitsmodul abgespeichert. Somit können mehrere Primzahlen bereitgestellt werden, die erst später beim Auftreten einer Schlüsselgenerierungs-Anfrage verarbeitet werden. Ebenso besteht die Möglichkeit, dass direkt, wenn die zur Schlüsselgenerierung erforderliche Anzahl an Primzahlen vorhanden ist, ein Schlüssel generiert wird und verschleiert auf dem Sicherheitsmodul abgespeichert wird.

Der Vorteil der soeben beschriebenen Variante besteht darin, dass zum einen generische Zwischenergebnisse bzw. Zwischenprodukte erzeugt werden können, die nicht nur spezifisch für einen bestimmten Schlüsseltyp verwendet werden können. Zum anderen sind die Teilfragmente gemäß den Zwischenprodukten in kürzerer Zeit berechenbar, so dass es seltener zu einem Abbruch der Teilsequenz der Schlüsselgenerierung und damit zu einem Verwerfen der bis dahin durchgeführten Operationen kommt.

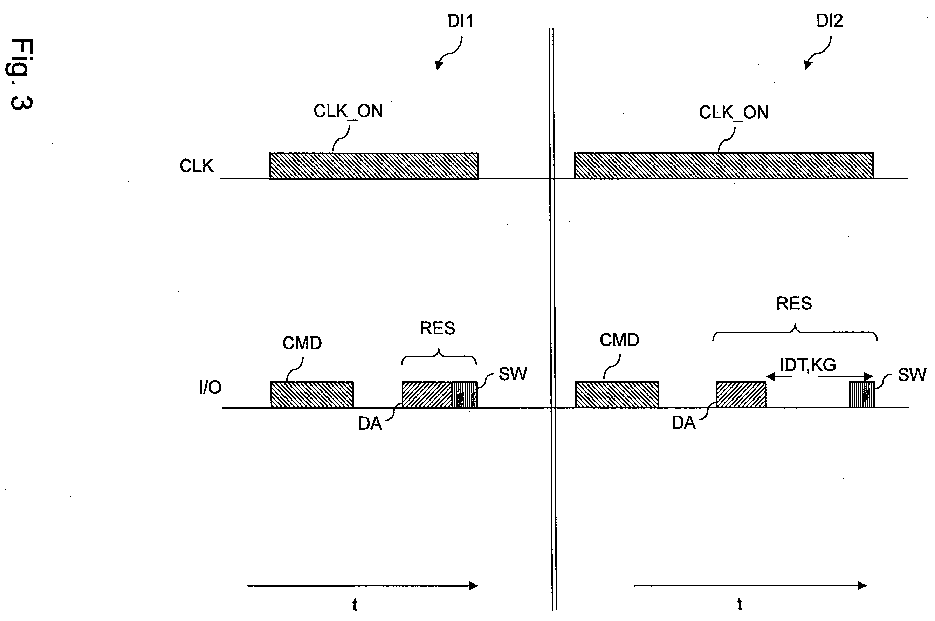

Fig. 3 zeigt eine Variante der Festlegung einer Zeitspanne, innerhalb der eine Schlüsselgenerierung im Rahmen der Erfindung erfolgen soll. Die Darstellung bezieht sich analog zu Fig. 2 auf eine Kommunikation zwischen Terminal und Sicherheitsmodul. Im linken Diagramm DI1 der Fig. 3 ist eine herkömmliche Verarbeitung eines Lesekommandos gezeigt, das von dem Terminal an das Sicherheitsmodul übertragen wird, wohingegen im rechten Diagramm DI2 eine spezielle Variante einer Verarbeitung des Kommandos im Rahmen der Erfindung wiedergegeben ist. Für beide Diagramme DI1 und DI2 ist in horizontaler Richtung die Zeitachse t wiedergegeben. Im oberen Teil der beiden Diagramme ist die Anschaltzeit der Uhr CLK des Terminals dargestellt. Die Anschaltzeit wird durch den Balken CLK_ON repräsentiert. Im unteren Teil der beiden Diagramme ist die Eingabe/ Ausgabe "I/O" im Rahmen der Kommunikation zwischen Terminal und Sicherheitsmodul dargestellt.

Gemäß Fig. 3 wird ein Lesekommando bzw. ein Kommando-Header CMD (z.B. READ RECORD) von dem Terminal an das Sicherheitsmodul übertragen. Die Übertragung kann z.B. basierend auf dem an sich bekannten Protokollen T=0 aus dem Standard ISO 7816 erfolgen. Die Übertragungs- bzw. Prozessierungszeiten des Kommandos bzw. der daraufhin übermittelten Antwortdaten RES sind durch horizontale Balken angedeutet, die den entsprechenden Bezugszeichen des Kommandos bzw. der Antwortdaten zugeordnet sind.

Wie aus den Diagrammen DI1 und DI2 ersichtlich, werden von dem Sicherheitsmodul in Antwort auf ein empfangenes Lesekommando CMD Antwortdaten RES rückübermittelt. Diese Antwortdaten sind aufgeteilt in die eigentlichen Nutzdaten DA sowie ein finales Statuswort bzw. einen Antwortstatus-Code SW, der aus dem oben genannten Protokoll bekannt ist. Das Statuswort bestätigt in der Regel die korrekte Verarbeitung des Kommandos, was durch SW = "0x9000" repräsentiert wird. Die Zeitspanne, welche das Sicherheitsmodul zum Aussenden des finalen Statusworts SW benötigt, liegt im Bereich von ein paar Millisekunden und ist in den beiden Diagrammen DI1 und DI2 durch einen Balken mit vertikaler Schraffur angedeutet. Nach Empfang des Statusworts im Terminal wird die Uhr des Terminals abgeschaltet, welche zuvor beim Übermitteln des Kommandos CMD angeschaltet wurde.

In dem Szenario gemäß dem Diagramm DI1 besteht das Problem, dass auf Seiten des Sicherheitsmoduls nur eine sehr kurze Zeitspanne (Idle Time) vorhanden ist, in der das Sicherheitsmodul eine Schlüsselgenerierung durchführen kann. Dies ist lediglich die Zeitspanne gemäß dem Balken mit der vertikalen Schraffur. Innerhalb dieser Zeitspanne kann keine zeitaufwändige Schlüsselgenerierung durchgeführt werden. Auch nach Verarbeitung des Kommandos ist die Schlüsselgenerierung nicht möglich, denn die Uhr des Terminals wird dann bis zum Aussenden des nächsten Kommandos abgeschaltet (sog. Clock Stop Mode), was auch dazu führt, dass das Sicherheitsmodul nur noch eine minimale Leistungsaufnahme haben darf und somit keine aufwändigen Operationen durchführen kann.

Zur Umgehung dieser Problematik wird gemäß dem Diagramm DI2 die Übermittlung des Statusworts SW verzögert. Hierdurch wird eine verlängerte Zeitspanne bzw. Idle Time IDT zwischen Übertragung der Daten DA und Aussenden des Statusworts SW erreicht. Diese Zeitspanne kann nunmehr zur Schlüsselgenerierung KG genutzt werden. Der Ablauf der Zeitspanne IDT wird durch einen Timer überwacht, wobei die Schlüsselgenerierung KG abgebrochen wird, falls sie nicht zum Ablauf der Zeitspanne IDT abgeschlossen ist. Hierdurch wird berücksichtigt, dass die Zeitspanne IDT nicht beliebig ausgedehnt werden kann, da manche Terminals nur einen bestimmten Zeitraum auf ein abschließendes Statuswort warten und ansonsten davon ausgehen, dass das Sicherheitsmodul nicht in Betrieb ist. Die Zeitspanne IDT kann je nach Ausgestaltung des Verfahrens auf verschiedene Weise gemessen werden. Insbesondere kann ein bereits vorhandener Zähler, wie z.B. ein WTX-Zähler (WTX = Waiting Time Extension), genutzt werden. Zum Beispiel kann die Zeitspanne IDT auf vier WTX festgelegt werden.

Die im Vorangegangenen beschriebenen Ausführungsformen der Erfindung weisen eine Reihe von Vorteilen auf. Durch eine vorgezogene Schlüsselgenerierung, die intern durch das Sicherheitsmodul angestoßen wird, kann erreicht werden, dass der Schlüssel bzw. das Schlüsselpaar bei einer echten Anforderung zur Schlüsselgenerierung sofort bzw. schneller zur Verfügung steht. Um durch die Schlüsselgenerierung nicht andere Operationen im Sicherheitsmodul zu blockieren, ist ein Zeitkriterium festgelegt, wobei die Schlüsselgenerierung abgebrochen wird, wenn sie nach Ablauf des Zeitkriteriums nicht abgeschlossen ist.

## Patentansprüche

1. Verfahren zum Betreiben eines Sicherheitsmoduls (SE), bei dem
- ein Kommando (CMD) im Sicherheitsmodul (SE) empfangen wird und durch das Sicherheitsmodul (SE) verarbeitet wird;
- zusätzlich zur Verarbeitung des Kommandos (CMD) eine Operation (KG) im Sicherheitsmodul (SE) vorgezogen durchgeführt wird;
**dadurch gekennzeichnet, dass**
die vorgezogene Operation (KG) zumindest einen Teilprozess einer Schlüsselgenerierung umfasst, der intern im Sicherheitsmodul (SE) ausgelöst wird, und die vorgezogene Operation (KG) durch das Sicherheitsmodul (SE) abgebrochen wird, falls sie nach Ablauf eines Zeitkriteriums nicht abgeschlossen ist,
wobei die vorgezogene Operation (KG) im Falle ihres Abbruchs bei ihrer erstmaligen Durchführung, die auf eine Initialisierung des Sicherheitsmoduls (SE) oder auf eine Benutzung eines Ergebnisses einer vormals durchgeführten vorgezogenen Operation (KG) folgt, bei jedem nachfolgend empfangenen Kommando (CMD) oder bei nachfolgend empfangenen Kommandos (CMD) einer oder mehrerer bestimmter Kommandoarten wieder durchgeführt wird, bis sie zumindest einmal ohne Abbruch beendet wird.

2. Verfahren nach Anspruch 1, **dadurch gekennzeichnet, dass** der Ablauf des Zeitkriteriums durch den Ablauf einer vorbestimmten Zeitspanne repräsentiert wird, welche insbesondere mit dem Empfang des Kommandos (CMD) oder nach einer Teilsequenz der Verarbeitung des Kommandos (CMD) beginnt.

3. Verfahren nach einem der vorhergehenden Ansprüche, **dadurch gekennzeichnet, dass** das Kommando (CMD) und/ oder eine Kommandofolge, deren Bestandteil das Kommando (CMD) ist, nicht den Zweck der Schlüsselgenerierung haben.

4. Verfahren nach einem der vorhergehenden Ansprüche, **dadurch gekennzeichnet, dass** die vorgezogene Operation (KG) den gesamten Prozess der Schüsselgenerierung umfasst.

5. Verfahren nach einem der vorhergehenden Ansprüche, **dadurch gekennzeichnet, dass** die Schlüsselgenerierung (KG) die Ermittlung von einer oder mehreren Primzahlen umfasst.

6. Verfahren nach Anspruch 5,
**dadurch gekennzeichnet, dass** die vorgezogene Operation (KG) einen Teilprozess der Schlüsselgenerierung in der Form der Ermittlung zumindest einer Primzahl umfasst.

7. Verfahren nach einem der vorhergehenden Ansprüche, **dadurch gekennzeichnet, dass** nach Benutzung eines Ergebnisses einer vormals durchgeführten vorgezogenen Operation (KG) oder nach einer Initialisierung des Sicherheitsmoduls (SE) die Durchführung der vorgezogenen Operation (KG) erstmalig nach Ablauf eines weiteren Zeitkriteriums zugelassen wird, wobei das weitere Zeitkriterium insbesondere derart ausgestaltet ist, dass die vorgezogene Operation (KG) erstmalig erst dann durchgeführt wird, wenn ein vorbestimmtes Kommando (ST) eine vorbestimme Anzahl von Malen im Sicherheitsmodul (SE) empfangen wurde.

8. Verfahren nach Anspruch 7, **dadurch gekennzeichnet, dass** das vorbestimmte Kommando (ST) ein Kommando ist, das in regelmäßigen Zeitabständen an das Sicherheitsmodul (SE) übermittelt wird.

9. Verfahren nach einem der vorhergehenden Ansprüche, **dadurch gekennzeichnet, dass** im Falle, dass die vorgezogene Operation (KG) vor Ablauf des Zeitkriteriums abgeschlossen wurde, die wiederholte Durchführung der vorgezogenen Operation (KG) nur solange zugelassen wird, bis die Schlüsselgenerierung abgeschlossen ist oder Ergebnisse der vorgezogenen Operation oder Operationen (KG) die Schlüsselgenerierung ermöglichen.

10. Verfahren nach einem der vorhergehenden Ansprüche, **dadurch gekennzeichnet, dass** nach einer Teilsequenz der Verarbeitung des Kommandos (CMD) die Durchführung der vorgezogenen Operation (KG) begonnen wird.

11. Verfahren nach einem der vorhergehenden Ansprüche, **dadurch gekennzeichnet, dass** das Kommando (CMD) eine Anfrage an das Sicherheitsmodul (SE) ist und die Verarbeitung des Kommandos die Übermittlung von Antwortdaten (RES) auf die Anfrage durch das Sicherheitsmodul umfasst, wobei die Antwortdaten (RES) vorzugsweise in Teilblöcken übertragen werden und die vorgezogene Operation (KG) zwischen der Übermittlung von aufeinander folgenden Teilblöcken durchgeführt wird.

12. Verfahren nach Anspruch 11, **dadurch gekennzeichnet, dass** die Anfrage und die Antwortdaten (RES) basierend auf dem Protokoll T=0 des Standards ISO 7816 übermittelt werden, wobei eine vorgezogene Operation (KG) durch das Sicherheitsmodul (SE) dann abgebrochen wird, wenn das Sicherheitsmodul (SE) ein Statuswort am Ende der Antwortdaten (RES) überträgt.

13. Sicherheitsmodul, **dadurch gekennzeichnet, dass** das Sicherheitsmodul (SE) derart ausgestaltet ist, das im Betrieb des Sicherheitsmoduls (SE)
- ein Kommando (CMD) im Sicherheitsmodul (SE) empfangen wird und durch das Sicherheitsmodul (SE) verarbeitet wird;
- zusätzlich zur Verarbeitung des Kommandos (CMD) eine Operation (KG) im Sicherheitsmodul (SE) vorgezogen durchgeführt wird;
**dadurch gekennzeichnet, dass**
die vorgezogene Operation (KG) zumindest einen Teilprozess einer Schlüsselgenerierung umfasst, der intern im Sicherheitsmodul (SE) ausgelöst wird, und die vorgezogene Operation (KG) durch das Sicherheitsmodul (SE) abgebrochen wird, falls sie nach Ablauf eines Zeitkriteriums nicht abgeschlossen ist,
wobei die vorgezogene Operation (KG) im Falle ihres Abbruchs bei ihrer erstmaligen Durchführung, die auf eine Initialisierung des Sicherheitsmoduls (SE) oder auf eine Benutzung eines Ergebnisses einer vormals durchgeführten vorgezogenen Operation (KG) folgt, bei jedem nachfolgend empfangenen Kommando (CMD) oder bei nachfolgend empfangenen Kommandos (CMD) einer oder mehrerer bestimmter Kommandoarten wieder durchgeführt wird, bis sie zumindest einmal ohne Abbruch beendet wird.

14. Sicherheitsmodul nach Anspruch 13, **dadurch gekennzeichnet, dass** das Sicherheitsmodul (SE) zur Durchführung eines Verfahrens nach einem der Ansprüche 2 bis 12 eingerichtet ist.

## Claims

1. Method for operating a security module (SE), in which
- a command (CMD) is received in the security module (SE) and processed by the security module (SE);
- in addition to the processing of the command (CMD), an operation (KG) in the security module (SE) is executed early;
**characterized in that**
the early operation (KG) comprises at least one sub-process of a key generation which is triggered internally in the security module (SE), and the early operation (KG) is aborted by the security module (SE) if it is not completed after expiry of a time criterion,
wherein the early operation (KG), in the event of its abortion when it is executed for the first time after an initialization of the security module (SE) or a usage of a result of a previously executed early operation (KG), is executed again for each subsequently received command (CMD) or for subsequently received commands (CMD) of one or more specific command types until it is completed at least once without abortion.

2. Method according to claim 1, **characterized in that** the expiry of the time criterion is represented by the expiry of a predetermined time period which starts in particular with the reception of the command (CMD) or after a partial sequence of the processing of the command (CMD).

3. Method according to one of the preceding claims, **characterized in that** the command (CMD) and/or a sequence of commands, which comprises the command (CMD) as a component, do not have the purpose of key generation.

4. Method according to one of the preceding claims, **characterized in that** the early operation (KG) comprises the entire process of key generation.

5. Method according to one of the preceding claims, **characterized in that** the key generation (KG) comprises the determination of one or more prime numbers.

6. Method according to claim 5, **characterized in that** the early operation (KG) comprises a sub-process of the key generation in the form of a determination of at least one prime number.

7. Method according to one of the preceding claims, **characterized in that** after a usage of a result of a previously executed early operation (KG) or after an initialization of the security module (SE), the execution of the early operation (KG) is permitted for the first time after the expiry of a further time criterion, wherein the further time criterion is particularly arranged such that the early operation (KG) is executed for the first time not before a predetermined command (ST) has been received a predetermined number of times in the security module (SE).

8. Method according to claim 7, **characterized in that** the predetermined command (ST) is a command which is transmitted to the security module (SE) at regular time intervals.

9. Method according to one of the preceding claims, **characterized in that** in the event of completion of the early operation (KG) before the expiry of the time criterion, the repeated execution of the early operation (KG) is only permitted until the key generation is completed or results of the early operation or operations (KG) enable the key generation.

10. Method according to one of the preceding claims, **characterized in that** after a partial sequence of the processing of the command (CMD), the execution of the early operation (KG) is started.

11. Method according to one of the preceding claims, **characterized in that** the command (CMD) is an inquiry to the security module (SE) and the processing of the command comprises the transmission of response data (RES) to the inquiry by the security module, wherein the response data (RES) preferably are transmitted in sub-blocks and the early operation (KG) is executed between the transmissions of successive sub-blocks.

12. Method according to claim 11, **characterized in that** the inquiry and the response data (RES) are transmitted based on the protocol T=0 of the ISO 7816 standard, wherein an early operation (KG) is aborted by the security module (SE) when the security module (SE) transmits a status word at the end of the response data (RES).

13. Security module, **characterized in that** the security module (SE) is arranged such that during operation of the security module (SE)
- a command (CMD) is received in the security module (SE) and processed by the security module (SE);
- in addition to the processing of the command (CMD), an operation (KG) in the security module (SE) is executed early;
**characterized in that**
the early operation (KG) comprises at least one sub-process of a key generation which is triggered internally in the security module (SE), and the early operation (KG) is aborted by the security module (SE) if it is not completed after expiry of a time criterion,
wherein the early operation (KG), in the event of its abortion when it is executed for the first time after an initialization of the security module (SE) or a usage of a result of a previously executed early operation (KG), is executed again for each subsequently received command (CMD) or for subsequently received commands (CMD) of one or more specific command types until it is completed at least once without abortion.

14. Security module according to claim 13, **characterized in that** the security module (SE) is adapted to carry out a method according to one of the claims 2 to 12.

## Revendications

1. Procédé, destiné à faire fonctionner un module de sécurité (SE), lors duquel
- une commande (CMD) est réceptionnée dans le module de sécurité (SE) et traitée par le module de sécurité (SE) ;
- additionnellement au traitement de la commande (CMD), une opération (KG) est réalisée de manière prévalente dans le module de sécurité (SE) ;
**caractérisé en ce que**
l'opération prévalente (KG) comprend au moins un processus partiel d'une génération de clé, qui est déclenché en interne dans le module de sécurité (SE), et l'opération prévalente (KG) est interrompue par le module de sécurité (SE), si elle n'est pas achevée après l'écoulement d'un critère de temps,
dans le cas de son interruption lors de sa première réalisation qui fait suite à une initialisation du module de sécurité (SE) ou à une utilisation d'un résultat d'une opération prévalente (KG) réalisée précédemment, à chaque commande (CMD) réceptionnée par la suite ou lors de commandes (CMD) réceptionnées par la suite de l'un ou de plusieurs types de commande déterminés, l'opération prévalente (KG) étant réalisée une fois encore, jusqu'à ce qu'elle s'achève au moins une fois sans interruption.

2. Procédé selon la revendication 1, **caractérisé en ce que** l'écoulement du critère de temps est représenté par l'écoulement d'une période prédéfinie, laquelle commence notamment à la réception de la commande (CMD) ou après une séquence partielle du traitement de la commande (CMD).

3. Procédé selon l'une quelconque des revendications précédentes, **caractérisé en ce que** la commande (CMD) et / ou une suite de commandes dont le composant est la commande (CMD) n'ont pas pour objet la génération de clé.

4. Procédé selon l'une quelconque des revendications précédentes, **caractérisé en ce que** l'opération prévalente (KG) comprend l'ensemble du processus de la génération de clé.

5. Procédé selon l'une quelconque des revendications précédentes, **caractérisé en ce que** la génération de clé (KG) comprend la détermination d'un ou de plusieurs nombres premiers.

6. Procédé selon la revendication 5,
**caractérisé en ce que** l'opération prévalente (KG) comprend un processus partiel de la génération de clé sous la forme de la détermination d'au moins un nombre premier.

7. Procédé selon l'une quelconque des revendications précédentes, **caractérisé en ce qu'**après l'utilisation d'un résultat d'une opération prévalente (KG) réalisée précédemment ou après une initialisation du module de sécurité (SE), la réalisation de l'opération prévalente (KG) est autorisée pour la première fois après l'écoulement d'un autre critère de temps, l'autre critère de temps étant conçu notamment de telle sorte que l'opération prévalente (KG) ne soit réalisée la première fois qu'une fois qu'une commande (ST) prédéfinie a été réceptionné un nombre prédéfini de fois dans le module de sécurité (SE).

8. Procédé selon la revendication 7, **caractérisé en ce que** la commande (ST) prédéfinie est une commande qui est transmise à des intervalles de temps réguliers au module de sécurité (SE).

9. Procédé selon l'une quelconque des revendications précédentes, **caractérisé en ce que** dans le cas où l'opération prévalente (KG) s'est achevée avant l'écoulement du critère de temps, la réalisation réitérée de l'opération prévalente (KG) n'est autorisée que jusqu'à ce que la génération de clé soit achevée ou des résultats de l'opération ou des opérations prévalent(e)s (KG) permettent la génération de clé.

10. Procédé selon l'une quelconque des revendications précédentes, **caractérisé en ce qu'**après une séquence partielle du traitement de la commande (CMD), la réalisation de l'opération (KG) commence.

11. Procédé selon l'une quelconque des revendications précédentes, **caractérisé en ce que** la commande (CMD) est une interrogation du module de sécurité (SE) et le traitement de la commande comprend la transmission de données de réponse (RES) à l'interrogation par le module de sécurité, les données de réponse (RES) étant transmises de préférence en blocs partiels et l'opération prévalente (KG) étant réalisée entre la transmission de blocs partiels successifs.

12. Procédé selon la revendication 11, **caractérisé en ce que** l'interrogation et les données de réponse (RES) sont transmises sur la base du protocole T=0 du standard ISO 7816, une opération prévalente (KG) étant interrompue par le module de sécurité (SE) lorsque le module de sécurité (SE) transmet un mot d'état à la fin des données de réponse (RES).

13. Module de sécurité, **caractérisé en ce que** le module de sécurité (SE) est conçu de telle sorte que pendant le fonctionnement du module de sécurité (SE)
- une commande (CMD) soit réceptionnée dans le module de sécurité (SE) et traitée par le module de sécurité (SE) ;
- en supplément du traitement de la commande (CMD), une opération (KG) soit réalisée de manière prévalente dans le module de sécurité (SE) ;
**caractérisé en ce que**
l'opération prévalente (KG) comprend au moins un processus partiel d'une génération de clé qui est déclenché en interne dans le module de sécurité (SE), et l'opération prévalente (KG) est interrompue par le module de sécurité (SE) si elle n'est pas achevée après l'écoulement d'un critère de temps,
dans le cas de son interruption lors de sa première réalisation qui fait suite à une initialisation du module de sécurité (SE) ou à une utilisation d'un résultat d'une opération prévalente (KG) réalisée précédemment, à chaque commande (CMD) réceptionnée par la suite ou lors de commandes (CMD) réceptionnées par la suite de l'un ou de plusieurs types de commande déterminés, l'opération prévalente (KG) étant réalisée une fois encore, jusqu'à ce qu'elle s'achève au moins une fois sans interruption.

14. Module de sécurité selon la revendication 13, **caractérisé en ce que** le module de sécurité (SE) est aménagé pour réaliser un procédé selon l'une quelconque des revendications 2 à 12.
